# EUROPÄISCHE PATENTANMELDUNG

(11) **EP 0 914 996 A2**
(43) Veröffentlichungstag der Anmeldung: **12.05.1999**
(21) Anmeldenummer: 98118781.8
(22) Anmeldetag: 05.10.1998
(51) Int. Cl.: B60T 7/10

(54) **Mit einer selbsttätigen Nachstelleinrichtung ausgestattete Hansbremse**

(30) Priorität: 10.11.1997 DE 19749551
(71) Anmelder: ED. Scharwächter GmbH, 42809 Remscheid (DE)
(72) Erfinder: Bode, Sven, 42855 Remscheid (DE); Kopittke, Wolfgang, 42857 Remscheid (DE)
(74) Vertreter: Schön, Theodor, Patent- und Zivilingenieur

(57) **Zusammenfassung**

Für eine mit einer selbsttätigen Nachstelleinrichtung ausgestattete Handbremse für Kraftwagen, bei welcher ein an einem mit einer Verzahnung ausgestatteten Brückenträger schwenkbar gelagerter Handbremshebel vermittels einer willkürlich ausrastbaren Feststellklinke in jeder beliebigen Anzugsstellung am Brückenträger festlegbar ist und bei welcher der Handbremshebel ferner vermittels einer federbelasteten Kupplungseinrichtung mit einer ihrerseits gleichfalls am Brückenträger gelagerten und in einer Drehrichtung mit einer durch eine Nachstellfeder gebildeten Federlast beaufschlagten Mitnahmeeinrichtung für das Bremsseil kuppelbar ist, wird vorgeschlagen, daß die Mitnahmeeinrichtung durch ein Zahnsegment oder Zahnrad gebildet ist und sowohl mit dem Handbremshebel und als auch mit einem mit dem Bremsseil verbundenen Anschlußteil im ständigen formschlüssigen Eingriff steht.

## Beschreibung

Die Erfindung bezieht sich auf eine mit einer selbsttätigen Nachstelleinrichtung ausgestattete Handbremse für Kraftwagen bei welcher ein an einem mit einer Verzahnung ausgestatteten Brückenträger schwenkbar gelagerter Handbremshebel vermittels einer willkürlich ausrastbaren Feststellklinke in jeder beliebigen Anzugsstellung am Brückenträger festlegbar ist und bei welcher der Handbremshebel ferner vermittels einer federbelasteten Kupplungseinrichtung mit einer ihrerseits gleichfalls am Brückenträger gelagerten und in einer Drehrichtung mit einer durch eine Nachstellfeder gebildeten Federlast beaufschlagten Mitnahmeeinrichtung für das Bremsseil kuppelbar ist.

Bekannte mit einer selbsttätigen Nachstelleinrichtung ausgestattete Handbremsen der vorstehend genannten Bauart zeichnen sich dadurch aus, daß das zu den Radbremsorganen führende Bremsseil an ein eine Nachstellscheibe bildendes umfangsverzahntes Scheibensegment angeschlossen ist, wobei die Nachstellscheibe zum Handbremshebel konzentrisch, jedoch von diesem unabhängig drehbar auf einer gemeinsamen Achse gelagert ist und wobei die Nachstellscheibe in einer Drehrichtung mit der Last einer durch eine Spiralfeder gebildeten Nachstellfeder beaufschlagt ist. Mit dem Handbremshebel ist die Nachstellscheibe bei derartig gestalteten Nachstelleinrichtungen jeweils vermittels einer durch eine Feder, insbesondere eine SchenkeFeder in Einrückrichtung beaufschlagte Mitnehmerklinke gekoppelt bzw. koppelbar, derart, daß die Mitnehmerklinke beim Anziehen der Handbremse und damit beim Verschwenken des Handbremshebels aus seiner lösestellung heraus ein Koppelung des Handbremshebels mit der unfangsverzahnten Nachstellscheibe und damit eine Mitnahme des Bremsseiles bewirkt. Die Mitnehmerklinke ist hierbei beispielsweise EP-0 535 131) als Kipphebel ausgeführt, welcher über seinen einen Hebelarm mit der Umfangsverzahnung des die Nachstellscheibe bildenden Scheibensegmentes und über seinen anderen Hebelarm mit einem an dem karosseriefesten Brückenträger ortsfest angeordneten Rückstellanschlag zusammenwirkt, derart, daß bei vollständig in die Lösestellung geschwenktem Handbremshebel dessen Koppelung mit der Nachstellscheibe aufgehoben wird und die Nachstellscheibe nunmehr ausschließlich unter dem Einfluß der sie beaufschlagenden Spiralfeder steht.
Diese und vergleichbare Bauarten von mit einer selbsttätigen Nachstelleinrichtung ausgestatteten Handbremsen zeichnen sich übereinstimmend dadurch aus, daß die Koppelung des Handbremshebels mit einer Seilscheibe oder einer vergleichbaren Mitnahmeeinrichtung für das wenigstens eine Bremsseil über ein Rastengesperre, insbesondere eine federbelastete Klinke erfolgt, was zum einen unvermeidlicherweise eine gewisse Geräuschentwicklung beim betätigen der Handbremse mit sich bringt und zum anderen einen verhältnismäßig hohen Herstellungsaufwand erfordert, da nur vergleichsweise Kleine Toleranzen zugelassen werden können.

Der Erfindung liegt daher die Aufgabe zugrnnde eine mit einer selbsttätigen Nachstelleinrichtung ausgestattete Handbremse der eingangs genannten Bauart für Kraftwagen dahingehend weiter zu verbessern, daß zumindest ohne Erhöhung des Herstellungs-und Montageaufwandes Hand in Hand mit einer Verbesserung der selbsttätigen Nachstellwirkung eine stufenlose und damit geräuschlose Betätigung der Handbremse erreicht wird.

Diese Aufgabe wird erfindungsgemäß im Wesentlichen dadurch gelöst, daß die Mitnahmeeinrichtung durch ein Zahnsegment oder Zahnrad gebildet ist und sowohl mit dem Handbremshebel und als auch mit einem mit dem Bremsseil verbundenen Anschlußteil im ständigen formschlüssigen Eingriff steht. Die erfindungsgemäße Ausgestaltung der Mitnahmeeinrichtung als Zahnsegment oder Zahnrad eröffnet die Möglichkeit die Gegeneingriffsteile, hier einerseits die Verbindung zum Handbremshebel und andererseits die Verbindung zu dem wenigstens einen Bremsseil gleichfalls als Längs-oder umfangsverzahnte Elemente auszubilden, so daß die bauliche Vorraussetzung für einem ständigen formschlüssigen Eingriff der Mitnahmeeinrichtung sowohl mit der Verbindung zum Handbremshebel als auch mit der Verbindung zu dem wenigstens einen Bremsseil gesichert ist. Aus dem ständigen gegenseitigen und formschlüssigen Eingriff der Mitnahmeeinrichtung sowohl mit der Verbindung zum Handbremshebel als auch mit der Verbindung zu dem wenigstens einen Bremsseil ergibt sich dann die Möglichkeit der Herstellung von gegenseitigen Freigängen oder Mitnahmen daraus, daß das eine der beiden jeweils miteinander, etwa im Sinne von Ritzel und Rad, im formschlüssigen Eingriff stehenden Teile rotierbar und feststell-bzw. blockierbar ausgebildet ist. Daraus resultiert damit auch eine stufenlose Feststellbarkeit der Handbremse, dahingehend, daß das Abbremsen bzw. Blockieren beispielsweise des Ritzels zu einer stufenlos eingreifenden, drehsicheren bzw. starren Koppelung von Ritzel bzw. Ritzelträger und Zahnrad bzw. Zahnsegment führt. Damit ermöglicht das erfindungsgemäße Bauprinzip die preiswerte Herstellung einer stufenlos und insbesondere geräuschlos einrückbaren bzw. auslösbaren Handbremse.

In einer bevorzugten Verwirklichungsform einer stufenlos und insbesondere geräuschlos einrückbaren Handbremse ist vorgesehen, daß das die Mitnahmeeinrichtung bildende Zahnsegment oder Zahnrad vermittels eines mit ihm kämmenden, am Handbremshebel gelagerten und blockierbaren Ritzels starr mit dem Handbremshebel koppelbar ist. Insbesondere kann dabei vorgesehen sein, daß dem mit dem die Mitnahmeeinrichtung bildenden Zahnsegment oder Zahnrad kämmenden Ritzel eine in Abhängigkeit von der Verschwenkbewegung des Handbremshebels stufenlos einrückende Blockiereinrichtung zugeordnet ist.

Im Rahmen der Vervollständigung der vorstehend dargelegten, bevorzugten Verwirklichungsform ist zweckmäßigerweise weiter vorgesehen, daß das mit dem Bremsseil verbundene und mit der durch ein Zahnsegment oder Zahnrad gebildeten Mitnahmeeinrichtung im ständigen formschlüssigen Eingriff befindliche Anschlußteil als Zahnstange ausgebildet und in einer zur Mitnahmeeinrichtung annähernd deckungsgleichen Anordnung lose in einer die untergreifenden Wanne angeordnet ist.

Eine besonders zweckmäßige Ausgestaltung einer stufenlos einrückbaren Handbremse sieht vor, daß die dem Ritzel zugeordnete Blockiereinrichtung zur Herstellung einer starren Verbindung zwischen dem Handbremshebel und der Mitnahmeeinrichtung durch eine Schlingfederanordnung gebildet ist, wobei eine Schlingfeder einerseits über einen radialen Fortsatz bleibend am Handbremshebel eingespannt ist und andererseits an einer am Handbremshebel gelagerten und drehsicher mit dem Ritzel verbundenen Rolle anliegt und wobei ein am Brückenträger feststehend angeordneter mit einem zweiten radialen Fortsatz der Schlingfeder zusammenwirkender Zapfen als Aushebeeinrichtung für dient.

In weiterer Einzelausgestaltung kann ferner vorgesehen sein, daß die das Anschlußteil bildende Zahnstange mit einer seitlichen Ausladung für den Anschluß des wenigstens einen Bremsseiles ausgestattet ist. Im Zusammenhang mit besonderen Bauarten von Handbremsen kann aber gleichermaßen auch vorgesehen sein, daß die das Anschlußteil bildende Zahnstange bei einem Anschluß zweier Bremsseile als Verteiler ausgebildet ist. Insbesondere im Zusammenhang mit dem Anschlußzweier Bremsseile an das Anschlußteil kann dann weiter vorgesehen sein, daß die das Anschlußteil bildende Zahnstange um einen gewissen Winkelbereich, insbesondere einen Winkelbereich von 15°, um eine vertikale Achse schwenkbar in der Wanne aufgenommen bzw. abgestützt ist.

In weiterer zweckmäßiger Einzelausgestaltung einer stufenlos einrückbaren, selbstnachstellenden Handbremse kann erfindungsgemäß weiter vorgesehen sein,
daß die das als Zahnstange ausgebildete Anschlußteil aufnehmende als Wanne ausgebildete Führung ist zugleich die Befestigungsbasis für den Brückenträger der Handbremse an der Fahrzeugkarosserie bildet.

In einer zweckmäßigen Abwandlung der vorstehende Ausgestaltungsform kann aber auch vorgesehen sein, daß mit der das Anschlußteil bildenden Zahnstange ein seitlich ausladendes Teil zur Verbindung des wenigstens einen Bremsseiles mit dem Anschlußteil verbunden ist, insbesondere in der Weise, daß das seitlich ausladend mit der das Anschlußteil bildenden Zahnstange verbundene Teil zur Verbindung des wenigstens einen Bremsseiles mit dem Anschlußteil um eine vertikale Achse schwenkbar und um einen begrenzten Schwenkwinkelbetrag, insbesondere einen Schwenkwinkelbetrag von 15° in beiden Schwenkrichtungen schwenkbar verbunden ist.

Schließlich wird noch ein Merkmal der Erfindung darin gesehen, daß die das die Mitnahmeeinrichtung bildende Zahnsegment oder Zahnrad in einer Drehrichtung beaufschlagende Nachstellfeder durch eine gegen den Handbremshebel abgestützte Spiralfeder gebildet ist und vermittels eines querausladenden Zapfens am Zahnsegment oder Zahnrad angreift.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine schaubildliche Darstellung einer selbstnachstellenden Handbremse, in Ansicht von der Fahrerseite;
- Figur 2: eine gleichfalls schaubildliche Darstellung einer selbstnachstellenden Handbremse jedoch ohne Darstellung des Handbremshebels, in Ansicht von der Fahrerseite;
- Figur 3: eine gleichfalls schaubildliche Darstellung einer selbstnachstellenden Handbremse ohne Darstellung des Handbremshebels, in Ansicht von der Beifahrerseite;
- Figur 4: eine auszugsweise Darstellung zu Figur 2 im vergrößerten Maßstab;
- Figur 5: eine weitere auszugsweise Darstellung zu Figur 2 im vergrößerten Maßstab.

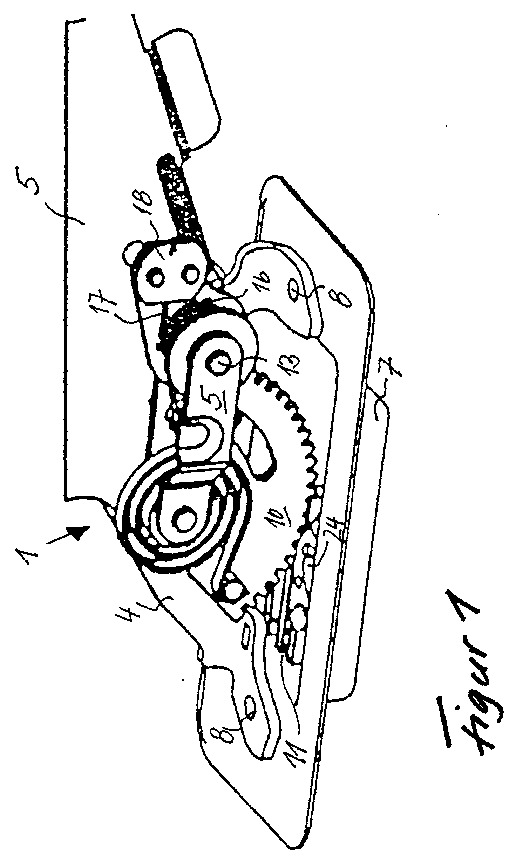

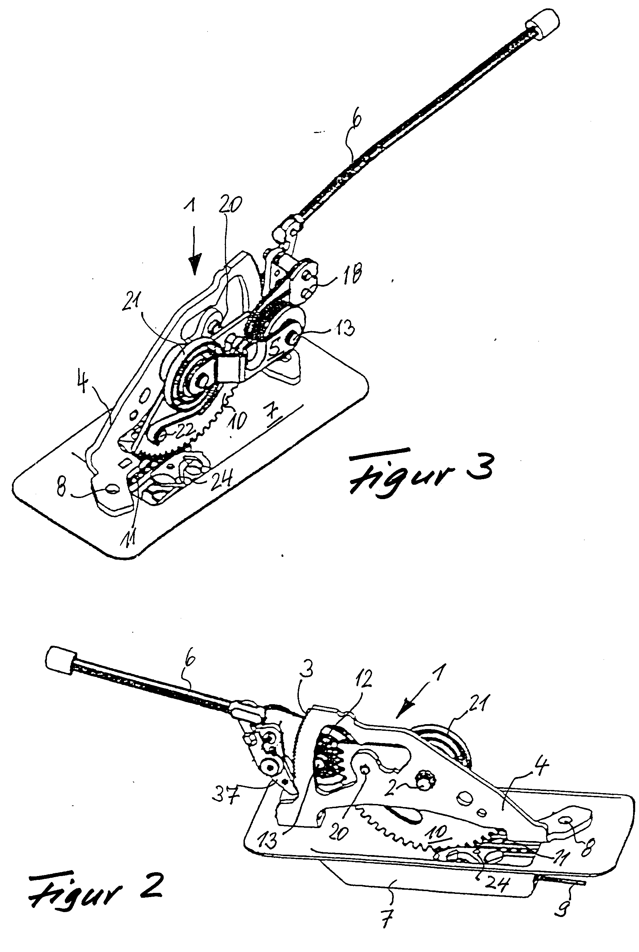

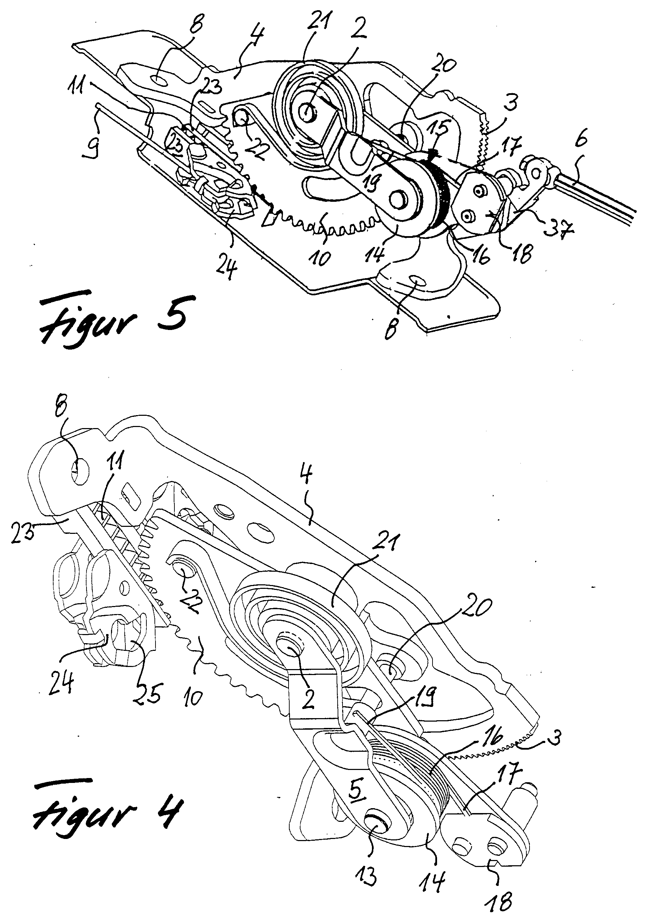

Die in der Zeichnung dargestellte, mit einer selbsttätigen Nachstelleinrichtung ausgestattete und im allgemeinen mit 1 bezeichnete Handbremse für Kraftwagen besteht im Wesentlichen aus einem um eine horizontale Achse 2 schwenkbar an einem mit einer radial gerichteten Verzahnung 3 ausgestatteten Brückenträger 4 gelagerten Handbremshebel 5, welcher vermittels einer über eine Betätigungsstange 6 willkürlich ausrastbaren Feststellklinke 7 in jeder beliebigen Anzugsstellung am Brückenträger 4 festlegbar ist. Der Brückenträger 4 ist über Schraubenbolzen 8 mit einer Wanne 7 verschraubt und über diese mit Zusammen mit dem Handbremshebel 5, von diesem jedoch unabhängig dreh-bar, ist auf der durch einen Bolzen gebildeten Achse 2 ein einen Teil einer Mitnahmeeinrichtung für wenigstens ein Bremsseil 9 bildendes Zahnsegment 10 gelagert. Das Zahnsegment 10 steht über seine Verzahnung einerseits mit einer ein Anschlußteil für das Bremsseil 9 bildenden Zahnstange 11 und andererseits mit einem Ritzel 12 im ständigen kämmenden Eingriff. Das Ritzel 12 ist vermittels eines seine Lagerung am Handbremshebel 5 bildenden Achszap-fens 13 drehsicher mit einer Rolle 14 verbunden. Die mit dem Ritzel 12 drehsicher verbundene Rolle 14 ist mittels einer Schlingfeder 15 dem Handbremshebel 5 gegenüber blockierbar, wobei die Windungen 16 der Schlingfeder 15 auf der Rolle 14 aufgewickelt sind und wobei die Schlingfeder 15 über eine erste radiale Ausladung 17 und vermittels einer Spannplatte 18 bleibend mit dem Handbremshebel 5 verbunden ist. Mit einer zweiten radialen Ausladung 19 der Schlingfeder 15 wirkt ein feststehend am Brückenträger 4 befestigter Zapfen 20 als Aushebeeinrichtung zusammen, in der Weise, daß infolge eines Abhebens der radialen Ausladung 19 der Schlingfeder 15 vom Zapfen 20 die Schlingfeder 15 die Drehbeweglichkeit der Rolle 14 und damit zugleich auch des mit ihr drehsicher verbundenen Ritzels 12 aufhebt, sobald der Handbremshebel 5 aus seiner der Lösestellung der Handbremse entsprechenden Stellung herausbewegt wird. Das einen Teil der Mitnahmeeinrichtung bildende Zahnsegment 10 ist vermittels einer als Spiralfeder 21 ausgebildeten Feder mit einer das oder die Bremsseile 9 nachstellenden Federlast beaufschlagt, wobei die Spiralfeder 21 einerseits am Handbremshebel 5 abgestützt ist und andererseits über einen an diesem quergerichtet angeordneten Zapfen 22 an dem bei in der Ruhestellung befindlichem Handbremshebel 5 frei drehbaren Zahnsegment 10 angreift, derart, däß das oder die Bremsseile 9 unabhängig von Bremsbelagabnutzungen oder Seillängungen oder Ähnlichem ständig spielfrei gehalten sind. Das Zahnsegment 10 steht andererseits ständig im kämmenden Eingriff mit der Zahnstange 11. Die Zahnstange 11 ist in einer zum Zahnsegment 11 im der Zahnstange 11. Die Zahnstange 11 ist in einer zum Zahnsegment 11 im Wesentlichen deckungsgleichen Ausrichtung lose und hauptsächlich längsverschieblich in der Wanne 7 abgestützt und vermittels seitlicher, mit dem Zahnsegment zusammenwirkender Stege 23 in einem gewissen Umfang auch geführt. Die Zahnstange 11 ist mit einer seitlichen Ausladung 24 für den Anschluß des wenigstens einen Bremsseiles 9 ausgestattet. Im Zusammenhang mit besonderen, den Anschluß zweier Bremsseile 9 an das durch eine Zahnstange 11 gebildete Anschlußteil erfordernden Bauarten von Handbremsen ist weiterhin vorgesehen, daß die das Anschlußteil bildende Zahnstange 11 als Verteiler ausgebildet und um einen gewissen Winkelbereich, insbesondere einen Winkelbereich von 15°, um eine vertikale Achse schwenkbar in der Wanne 7 aufgenommen bzw. abgestützt ist. Aus der Darstellung der Figur 5 ist im weiteren ersichtlich, daß die seitliche Ausladung 24 der Zahnstange 11 mit winkelförmigen Eingriffsausnehmungen 25 für ein in der Zeichnung im Einzelnen nicht dargestelltes Endteil des Bremsseiles 9 ausgestattet ist.

## Patentansprüche

1. Mit einer selbsttätigen Nachstelleinrichtung ausgestattete Handbremse für Kraftwagen bei welcher ein an einem mit einer Verzahnung ausgestatteten Brückenträger schwenkbar gelagerter Handbremshebel vermittels einer willkürlich ausrastbaren Feststellklinke in jeder beliebigen Anzugsstellung am Brückenträger festlegbar ist und bei welcher der Handbremshebel ferner vermittels einer federbelasteten Kupplungseinrichtung mit einer ihrerseits gleichfalls am Brückenträger gelagerten und in einer Drehrichtung mit einer durch eine Nachstellfeder gebildeten Federlast beaufschlagten Mitnahmeeinrichtung für das Bremsseil kuppelbar ist,
dadurch gekennzeichnet,
daß die Mitnahmeeinrichtung durch ein Zahnsegment oder Zahnrad gebildet ist und sowohl mit dem Handbremshebel und als auch mit einem mit dem Bremsseil verbundenen Anschlußteil im ständigen formschlüssigen Eingriff steht.

2. Handbremse nach Anspruch 1, dadurch gekennzeichnet, daß das die Mitnahmeeinrichtung bildende Zahnsegment oder Zahnrad vermittels eines mit ihm kämmenden, am Handbremshebel gelagerten und blockierbaren Ritzels starr mit dem Handbremshebel koppelbar ist.

3. Handbremse nach Anspruch 1 und 2, dadurch gekennzeichnet, daß dem mit dem die Mitnahmeeinrichtung bildenden Zahnsegment oder Zahnrad kämmenden Ritzel eine in Abhängigkeit von der Verschwenkbewegung des Handbremshebels stufenlos einrückende Blockiereinrichtung zugeordnet ist.

4. Handbremse nach Anspruch 1 bis 3, dadurch gekennzeichnet, daß das mit dem Bremsseil verbundene und mit der durch ein Zahnsegment oder Zahnrad gebildeten Mitnahmeeinrichtung im ständigen formschlüssigen Eingriff befindliche Anschlußteil als Zahnstange ausgebildet und in einer zur Mitnahmeeinrichtung annähernd deckungsgleichen Anordnung lose in einer die untergreifenden Wanne angeordnet ist.

5. Handbremse nach Anspruch 1 bis 4, dadurch gekennzeichnet, daß die dem Ritzel zugeordnete Blockiereinrichtung zur Herstellung einer starren Verbindung zwischen dem Handbremshebel und der Mitnahmeeinrichtung durch eine Schlingfederanordnung gebildet ist, wobei eine Schlingfeder einerseits über einen radialen Fortsatz bleibend am Handbremshebel eingespannt ist und andererseits an einer am Handbremshebel gelagerten und drehsicher mit dem Ritzel verbundenen Rolle anliegt und wobei ein am Brückenträger feststehend angeordneter mit einem zweiten radialen Fortsatz der Schlingfeder zusammenwirkender Zapfen als Aushebeeinrichtung für dient.

6. Handbremse nach einem der voraufgehenden Ansprüche 1 bis 5, dadurch gekennzeichnet, daß die das als Zahnstange ausgebildete Anschlußteil aufnehmende als Wanne ausgebildete Führung ist zugleich die Befestigungsbasis für den Bruckenträger der Handbremse an der Fahrzeugkarosserie bildet.

7. Handbremse nach einem der voraufgehenden Ansprüche 1 bis 6, dadurch gekennzeichnet, daß die das Anschlußteil bildende Zahnstange mit einer seitlichen Ausladung für den Anschluß des wenigstens einen Bremsseiles ausgestattet ist.

8. Handbremse nach einem der voraufgehenden Ansprüche 1 bis 7, dadurch gekennzeichnet, daß die das Anschlußteil bildende Zahnstange um einen gewissen Winkelbereich, insbesondere einen Winkelbereich von 15°, um eine vertikale Achse schwenkbar in der Wanne aufgenommen bzw. abgestützt ist.

9. Handbremse nach einem der voraufgehenden Ansprüche 1 bis 8, dadurch gekennzeichnet, daß die das Anschlußteil bildende Zahnstange bei einem Anschluß zweier Bremsseile als Verteiler ausgebildet ist.

10. Handbremse nach einem der voraufgehenden Ansprüche 1 bis 9, dadurch gekennzeichnet, daß die das die Mitnahmeeinrichtüng bildende Zahnsegment oder Zahnrad in einer Drehsichtung beaufschlagende Nachstellfeder durch eine gegen den Handbremshebel abgestützte Spiralfeder gebildet ist und vermittels eines querausladenden Zapfens am Zahnsegment oder Zahnrad angreift.

11. Handbremse nach einem der voraufgehenden Ansprüche 1 bis 7, dadurch gekennzeichnet, daß mit der das Anschlußteil bildenden Zahnstange ein seitlich ausladendes Teil zur Verbindung des wenigstens einen Bremsseiles mit dem Anschlußteil verbunden ist.

12. Handbremse nach Anspruch 11, dadurch gekennzeichnet, daß das seitlich ausladend mit der das Anschlußteil bildenden Zahnstange verbundene Teil zur Verbindung des wenigstens einen Bremsseiles mit dem Anschlußteil um eine vertikale Achse schwenkbar und um einen begrenzten Schwenkwinkelbetrag, insbesondere einen Schwenkwinkelbetrag von 15° in beiden Schwenkrichtungen schwenkbar verbunden ist.
